# EUROPÄISCHE PATENTSCHRIFT

(11) **EP 4 120 481 B1**
(45) Veröffentlichungstag und Bekanntmachung des Hinweises auf die Patenterteilung: **25.03.2026**
(21) Anmeldenummer: 22176487.1
(22) Anmeldetag: 31.05.2022
(51) Int. Cl.: H01R 12/81, H01R 12/63, G01L 1/14, B81B 3/00

(54) **VERBINDUNGSANORDNUNG**
CONNECTION ASSEMBLY
ENSEMBLE DE CONNEXION

(30) Priorität: 16.07.2021 DE 102021118460
(43) Veröffentlichungstag der Anmeldung: 18.01.2023
(73) Patentinhaber: H & B Electronic GmbH & Co. KG, 75392 Deckenpfronn (DE); Fraunhofer-Gesellschaft zur Förderung der angewandten Forschung e.V., 80686 München (DE)
(72) Erfinder: Morlok, Tobias, 71159 Mötzingen (DE); Bayerbach, Jan, 75365 Calw (DE); Brunner, Bernhard, 97250 Erlabrunn (DE)
(74) Vertreter: Wacker, Jost Oliver

(56) Entgegenhaltungen:
- EP-A1- 2 100 779
- EP-A1- 3 282 218
- EP-A1- 3 540 858
- US-B1- 9 972 930

## Beschreibung

Die Erfindung betrifft eine Verbindungsanordnung für die elektrische und mechanische Verbindung zwischen einer zu kontaktierenden Kontaktelektrode, die beispielsweise durch eine flexible beziehungsweise elastische Elektrode eines Sensors oder einer Temperierbeziehungsweise Heizeinrichtung gebildet ist, und einem elektrischen Leiterelement mit einem oder mehreren elektrischen Kabeln, einem Bus-Leiter, einer Anordnung aus elektrischen Fäden, einer elektrisch leitfähigen Folie, oder Ähnlichem, nach dem Oberbegriff des Anspruchs 1 sowie eine Verbindungsvorrichtung zur Herstellung einer solchen Verbindungsanordnung. Die Verbindungsanordnung weist hierbei einen flexiblen beziehungsweise elastischen Sensor-/Elektrodenabschnitt, in dem die wenigstens eine Kontaktelektrode zumindest teilweise angeordnet ist, sowie wenigstens einen elektrischen Innenleiter des elektrischen Leiterelementes auf, der zum Anlegen und/oder Abnehmen einer elektrischen Spannung und/oder kapazitiven Änderung an beziehungsweise von der Kontaktelektrode dient. Ferner ist dabei ein elektrischer Kontaktbereich vorgesehen, in dem der wenigstens eine elektrische Innenleiter des Leiterelementes beziehungsweise des Busleiters die Kontaktelektrode des Sensors elektrisch kontaktiert.

Derartige Verbindungsanordnungen werden benötigt, um beispielsweise dielektrische Elastomersensoren, die eine als Dielektrikum wirkende dehnbare und/oder volumenkompressible Folie beziehungsweise Schicht zwischen zwei Elektroden aufweisen, oder flexible beziehungsweise elastisch verformbare Temperiereinrichtungen, wie insbesondere elektrische Heizelemente, an einen kabel- oder busförmigen Leiter anzuschließen. Der Leiter kann dabei zur Verbindung mit einem anderen elektrischen/elektronischen Bauteil dienen, wie beispielsweise einer Auswertungseinheit, einer optischen, akustischen und/oder taktilen Ausgabeeinheit und/oder einer Spannungsquelle beziehungsweise Stromversorgung. Derartige dielektrische Elastomersensoren oder Temperiereinrichtungen werden dabei beispielsweise an textilen Materialien vorgesehen beziehungsweise befestigt oder vernäht. Diese können insbesondere Bestandteil eines Funktionskleidungsstückes, eines Wäscheteils, eines Vorhanges oder eines sonstigen Textils oder Gebrauchsgegenstandes mit einer sensitiven Oberfläche und einer bestimmten Funktion sein. Beispielsweise kann die jeweilige Sensorik dabei zur Überwachung von Körperfunktionen eines Benutzers oder zur Ermittlung bestimmter Materialbelastungen dienen. Ferner kann die Verbindungsanordnung in der Art eines Schalters beziehungsweise Aktivators zur Übermittlung eines Signals in Abhängigkeit von einer ermittelten Beaufschlagung beziehungsweise Beanspruchung verwendet werden, die an dem textilen Trägermaterial auftritt.

Aus EP2698616A2 ist ein flächiger volumenkompressibler kapazitiver Sensor zur Messung von Druck und/oder zur Messung oder Detektion von Deformationen bekannt. Um zwischen den Elektroden zum Zwecke einer Kapazitätsmessung Spannungen anlegen oder Ströme messen zu können, ist an diesen eine Metalldrahtverbindung mit einer entsprechenden elektrischen Einrichtung vorgesehen. Alternativ hierzu kann eine Kapazitätsmessung auch über Funk erfolgen, wofür in dem Sensor ein oder mehrere Transponder vorgesehen sein können.

EP3282218A1 beschreibt eine kapazitive Sensorvorrichtung mit einem zwischen zwei Stofflagen angeordneten Sensorkörper. Der Sensorkörper weist dabei wenigstens eine dehnbare dielektrische Schicht auf, die zwischen zwei gleichermaßen dehnbare Elektrodenschichten angeordnet ist. Beide Elektrodenschichten sind jeweils über einen Leitungsdraht mit einem Verbindungsabschnitt verbunden, der wiederum jeweils zum Anlöten eines externen Bleidrahtes dient. Die Verbindungsabschnitte werden dabei von einem nicht dehnbaren Material abgedeckt.

EP 2 100 779 A1 beschreibt eine Sensoranordnung mit einem Foliensensor, der über ein Anschlusskabel mit einer Steuerungseinheit verbunden ist. Der Foliensensor ist dabei insbesondere an einem Fahrzeugsitz verwendbar, um festzustellen, ob der betreffende Sitz belegt ist. Das Anschlusskabel ist durch ein Flachkabel mit einem abisolierten Endabschnitt gebildet, der mittels einer Laminierung an einer Kontaktbahn des Foliensensors gehalten ist. Die Laminierung umfasst dabei eine viereckige oberseitige Deckschicht und eine dazu getrennt ausgebildete, ebenfalls viereckige unterseitige Deckschicht sowie eine elektrisch leitfähige Klebeverbindung zwischen dem abisolierten Endabschnitt und der Kontaktbahn.

Problematisch an den bekannten Metalldrahtverbindungen ist dabei, dass insbesondere in Folge des sehr unterschiedlichen Materialverhaltens der Metalldrähte gegenüber den flexibel beziehungsweise elastisch verformbaren Sensoren oder Elektroden eine dauerhafte elektrische Kontaktierung nur schwer zu gewährleisten ist. Insbesondere kann es beim An- und Ablegen sowie beim Waschen einer mit entsprechenden Sensoren ausgestatteten Funktionsbekleidungen zu relativ starken Verformungen der Sensoren kommen, die zu einer zeitweisen Aufhebung oder einem permanenten Abreißen des elektrischen Kontaktes führen können.

Die Aufgabe der Erfindung ist es, bei einer gattungsgemäßen Verbindungsanordnung die genannten Nachteile zu vermeiden und eine stabile und sichere elektrische Verbindung zwischen dem elastischen Sensor-/Elektrodenabschnitt und dem wenigstens einen elektrischen Innenleiter des elektrischen Leiterelementes zu gewährleisten.

Diese Aufgabe wird durch eine Verbindungsanordnung mit den Merkmalen des Anspruchs 1 gelöst. Dabei ist eine Verbindungsanordnung vorgesehen, die eine Verbindungsvorrichtung zur Herstellung einer elektrischen Verbindung zwischen dem elastischen Sensor-/Elektrodenabschnitt und dem elektrischen Innenleiter aufweist, die im Kontaktbereich unter Zwischenlage des Innenleiters gegen die Kontaktelektrode vorspannbar ist. Hierdurch kann auch während oder nach einer Verformung des elastischen Sensor-/Elektrodenabschnittes beziehungsweise einer damit verbundenen Relativbewegung von dessen Kontaktelektrode gegenüber dem elektrischen Leiterelement eine sichere elektrischen Kontaktierung gewährleistet werden. Dabei sorgt die durch die Verbindungsvorrichtung erzeugte Vorspannung auch während einer Verformung beziehungsweise Rückverformung des elastischen Sensor-/Elektrodenabschnittes für ein stabiles Anpressen des elektrischen Innenleiters gegen die Kontaktelektrode. Auf diese Weise kann ein dauerhafter elektrischer Kontakt gewährleistet und ein Abreißen der elektrischen Verbindung verhindert werden.

Dabei ist es besonders bevorzugt, dass die Verbindungsvorrichtung eine den Sensor-/Elektrodenabschnitt auf Höhe des elektrischen Kontaktbereichs vollständig umschließende Klemmeinrichtung aufweist. Durch eine derartige, insbesondere geschlossen umlaufende Aufnahme des Sensor-/Elektrodenabschnittes in der Klemmeinrichtung kann die mittels der Verbindungsvorrichtung erzeugte Vorspannung größenmäßig vorbestimmt und im Kontaktbereich dauerhaft angelegt werden. Vorteilhafterweise weist der elektrische Innenleiter im Kontaktbereich eine Kontaktflächenvergrößerung auf, die beispielsweise durch ein Lot, einen leitfähigen Klebstoff, eine Metalldirektanspritzung, einen Crimpkontakt oder eine sonstige bekannte und geeignete Kontaktflächenvergrößerung gebildet ist. Hierdurch kann insbesondere bei der Montage ein gewisser Toleranzausgleich erfolgen, durch den eine besonders sichere Kontaktierung zwischen dem elektrischen Innenleiter und der Kontaktelektrode gewährleistet werden kann.

Dabei ist es günstig, wenn der elastische Sensor-/Elektrodenabschnitt durch einen zumindest abschnittsweise flächenförmigen, elastischen Sensor, wie beispielsweise einen Dehnungs- und/oder Drucksensor mit wenigstens einem dehnbaren und/oder kompressiblen dielektrischen Elastomer gebildet ist, das zwischen der Kontaktelektrode und wenigstens einer weiteren Elektrode angeordnet ist. Hierdurch kann der flexible beziehungsweise elastische Sensor-/Elektrodenabschnitt zur kapazitiven Ermittlung von Zug- und/oder Druckspannungen und/oder zur Messung von Beschleunigungen oder zur Detektion von Deformationen an einem flexiblen Trägermaterial genutzt werden, wobei das elastisch verformbare Elastomer als Dielektrikum zwischen den Elektroden des Sensors dient. Hierdurch ist eine besonders exakte kapazitive Ermittlung der gewünschten Messwerte möglich.

In einer bevorzugten Ausführungsform weist der abschnittsweise elastische Sensor eine mit der Kontaktelektrode verbundene Leiterplatte auf, wodurch die Verbindungsanordnung in Verbindung mit einer großen Auswahl an Sensoren verwendet werden kann. Beispielsweise kann der Sensor dabei neben der Erfassung von Zug- und Druckbeanspruchungen auch zur Ermittlung von Beschleunigungen oder Geschwindigkeiten dienen.

Besonders vorteilhaft ist es, wenn die Verbindungsvorrichtung ein wenigstens zweiteiliges Gehäuse mit einem ersten Gehäuseteil und einem zweiten Gehäuseteil aufweist, die unter Zwischenlage des Sensor-/Elektrodenabschnittes und des elektrischen Innenleiters sowie unter Erzeugung von Klemmkräften im Kontaktbereich zusammengesetzt werden können. Die Gehäuseteile können dabei beispielsweise aus einem Duroplast und/oder einem Elastomer, wie beispielsweise Liquid Silicon Rubber (LSR) hergestellt sein. Das wenigstens zweiteilige Gehäuse ermöglicht dabei ein einfaches und auch nachträgliches Umschließen des flexiblen beziehungsweise elastischen Sensor-/Elektrodenabschnittes auf Höhe des elektrischen Kontaktbereichs. Zudem kann das zweiteilige Gehäuse hierbei in einfacher Weise größenmäßig mit dem flexiblen beziehungsweise elastischen Sensor-/Elektrodenabschnitt abgestimmt werden, um im Kontaktbereich unter Zwischenlage des elektrischen Innenleiters einen gewünschten Anpressdruck an der betreffenden Kontaktelektrode erzeugen zu können. Alternativ zu dem zweiteiligen Gehäuse ist ferner auch ein einteiliges Gehäuse möglich, das insbesondere durch Umspritzten des Kontaktbereichs herstellbar ist, wie beispielsweise unter Verwendung eines Duroplasten oder eines Elastomers.

Alternativ oder zusätzlich hierzu kann die Verbindungsvorrichtung einen Schrumpfschlauch aufweisen, der auf Höhe des Kontaktbereichs unter Zwischenlage des elektrischen Innenleiters um den Sensor-/Elektrodenabschnitt herum aufgeschrumpft werden kann, um eine sichere Verbindung zwischen dem elektrischen Innenleiter und der Kontaktelektrode sowie ferner eine sichere elektrische Trennung des Kontaktbereichs gegenüber einer außerhalb des Schrumpfschlauchs angeordneten elektrischen Schirmung gewährleisten zu können.

Zudem ist es günstig, wenn die Verbindungsvorrichtung auf Höhe des Kontaktbereichs einen Niederhalter aufweist, über den der elektrische Innenleiter gegen die Kontaktelektrode vorgespannt werden kann. Der Niederhalter kann dabei in besonderer Weise an die Form des betreffenden Innenleiter und/oder die betreffende Kontaktelektrode angepasst sein, um eine sichere Kontaktierung zu gewährleisten. Insbesondere bei Verwendung der Verbindungsvorrichtung für unterschiedlich geformte Innenleiter und/oder Kontaktelektroden kann diese allein durch Verwendung eines entsprechend geformten Niederhalters an den jeweiligen Kontaktbereich angepasst werden, ohne die Verbindungsvorrichtung insgesamt beziehungsweise dessen Gehäuse an die unterschiedlichen Formen der Innenleiter und/oder Kontaktelektroden anpassen zu müssen. Auf diese Weise können die Herstellungskosten der Verbindungsvorrichtungen für unterschiedliche Verbindungsanordnungen reduziert werden.

Vorteilhafterweise ist der elektrische Innenleiter dabei mit dem Niederhalter verbunden, wobei der Niederhalter beispielsweise an den Innenleiter angeklebt, angespritzt, angesteckt, mit diesem verrastet oder in jeder anderen bekannten und geeigneten Weise mit diesem verbunden sein kann. Auf diese Weise kann der Innenleiter bei der Montage der Verbindungsanordnung zusammen mit dem Niederhalter als bauliche Einheit gehandhabt werden, was die Montage insgesamt vereinfacht.

Ferner ist es bevorzugt, wenn der elektrische Innenleiter eine elektrische Leiterschirmung aufweist, die beabstandet zum Kontaktbereich eine elektrische Sensorschirmung des Sensor-/Elektrodenabschnittes unter Ausbildung eines ersten Schirmungskontaktbereichs kontaktiert. Auf diese Weise kann der elektrische Kontaktbereich gegenüber störenden elektrischen und/oder magnetischen Feldern abgeschirmt werden, um eine störungsfreie Signalgewinnung, -übertragung und -verarbeitung gewährleisten zu können. Zudem wird gleichzeitig die Umgebung und insbesondere ein Benutzer der Verbindungsanordnung, der diese beispielsweise an einem Funktionskleidungsstück verwendet, gegenüber den ausgehenden Feldern beziehungsweise den elektromagnetische Wellen abgeschirmt.

Vorteilhafterweise weist die Sensorschirmung zwei Schirmungselektroden auf, die an zwei voneinander abgewandten Seiten der Kontaktelektrode angeordnet sind, wobei an der Verbindungsvorrichtung eine Schirmungsanordnung vorgesehen ist, die den Kontaktbereich nach außen hin abschirmt und dabei beide Schirmungselektroden der Sensorschirmung elektrisch verbindet. Hierdurch kann eine besonders sichere Abschirmung der Kontaktelektrode gewährleistet werden.

Dabei ist es günstig, wenn die Schirmungsanordnung am Gehäuse gehalten ist, wobei sie an diesem beispielsweise integriert, eingesetzt, eingeklebt oder in sonstiger bekannter und geeigneter Weise mit diesem verbunden sein kann. Insbesondere kann die Schirmungsanordnung durch ein entsprechendes Material des Gehäuses insgesamt oder von Teilen des Gehäuses gebildet sein. Hierzu können das Gehäuse oder die Gehäuseteile beispielsweise aus einem leitfähigen Kunststoff oder aus Metall hergestellt sein oder insgesamt einen Molded Interconnect Device oder Mechatronic Integrated Device bilden. Hierdurch wird beim Zusammensetzen des Gehäuses gleichzeitig auch die Abschirmung der Kontaktelektrode durch Verbindung der einzelnen Abschirmungsteile hergestellt, was die Montage der Verbindungsanordnung erheblich vereinfacht.

Zudem kann die Schirmungsanordnung im Falle der Verwendung eines Schrumpfschlauches zur Sicherung des elektrischen Kontaktbereichs außerhalb des Schrumpfschlauches vorgesehen sein. Auf diese Weise wird durch den Schrumpfschlauch eine sichere elektrische Trennung zwischen dem Kontaktbereich und der Schirmungsanordnung gewährleistet. Hierzu kann die Schirmungsanordnung beispielsweise in ein Gehäuse integriert oder durch dieses gebildet sein, wobei dieses Gehäuse den Schrumpfschlauch umgreift und dabei beispielsweise einteilig ausgebildet ist. Alternativ hierzu kann der Schrumpfschlauch beispielsweise mit einem leitfähigen Material umspritzt sein. In jedem Fall kann auf diese Weise eine allseitige Abschirmung des Kontaktbereichs gewährleistet werden.

In jedem Fall ist es günstig, wenn die Schirmungsanordnung ein Schirmungselement aufweist, das aus einem leitfähigen Kunststoff, aus einem eingespritzten Metall oder einem leitfähigen Lack hergestellt ist, um die Abschirmung in kostengünstiger Weise an die jeweiligen Konturen im elektrischen Kontaktbereich anpassen zu können.

In einer besonders bevorzugten Ausführungsform weist die Verbindungsvorrichtung zudem erste Zugentlastungsmittel für das elektrische Leiterelement auf. Hierdurch können Zugkräfte, die in Folge äußerer mechanischer Beanspruchungen am elektrischen Leiterelement oder am Sensor auftreten, unabhängig vom Kontaktbereich aufgenommen werden. Derartige Zugkräfte können dabei beispielsweise bei der Montage der Verbindungsanordnung beziehungsweise beim Einnähen in ein Textil oder bei deren Benutzung, wie insbesondere beim Tragen, An- und Ausziehen oder beim Waschen eines mit der Verbindungsanordnung ausgestatteten Materials, wie beispielsweise eines Funktionsbekleidungsstückes, auftreten. Durch die an den Zugentlastungsmitteln abgetragenen Kräfte kann eine Beschädigung beziehungsweise eine Erhöhung des Kontaktwiderstandes bis hin zum vollständigen Kontaktabriss am Kontaktbereich vermieden werden.

Dabei ist es günstig, wenn die ersten Zugentlastungsmittel Umlenkmittel oder sonstige Schikanen zur Aufnahme von Zugkräften am Gehäuse aufweisen, wie beispielsweise einen umwickelbaren Dom. Auf diese Weise kann das elektrische Leiterelement an den Umlenkmitteln umgelenkt beziehungsweise um den Dom gewickelt werden, um im Falle von auftretenden Zugkräften, diese über die Zugentlastungsmittel am Gehäuse abtragen zu können. Alternativ oder zusätzlich hierzu können die ersten Zugentlastungsmittel auch durch eine Klebeverbindung zwischen dem elektrischen Leiterelement und dem Gehäuse gebildet sein.

Vorteilhafterweise weisen die ersten Zugentlastungsmittel einen ersten Klemmkörper am ersten Gehäuseteil und einen zweiten Klemmkörper am zweiten Gehäuseteil auf, wobei die Klemmkörper unter Ausbildung von Klemmkräften am elektrischen Leiterelement aneinander angelegt werden können. Auf diese Weise werden die Klemmkörper beim Zusammensetzen des Gehäuses unter Zwischenlage des Leiterelementes aneinander angelegt, wobei dieses in seiner Position gegenüber dem Gehäuse festgeklemmt wird. Bei anschließender Beanspruchung des Leiterelementes durch äußere Zugkräfte, können diese über die Klemmkörper am Gehäuse aufgenommen werden.

Von besonderem Vorteil ist es dabei, wenn die Verbindungsvorrichtung zweite Zugentlastungsmittel für den Sensor-/Elektrodenabschnitt aufweist, um die an diesem auftretenden Kräfte in Folge einer äußeren Beanspruchung unabhängig von den ersten Zugentlastungsmitteln aufnehmen zu können. Auf diese Weise können die zweiten Zugentlastungsmittel an die jeweilige Form des Sensor-/Elektrodenabschnittes angepasst werden.

Dabei ist es günstig, wenn die zweiten Zugentlastungsmittel einen ersten Sensorklemmkörper am ersten Gehäuseteil und einen zweiten Sensorklemmkörper am zweiten Gehäuseteil aufweisen, die unter Ausbildung von Klemmkräften am Sensor aneinander anlegbar sind. Auf diese Weise werden die Sensorklemmkörper beim Zusammensetzen des Gehäuses unter Zwischenlage des Sensors aneinander angelegt, wobei dieser in seiner Position gegenüber dem Gehäuse festgeklemmt wird. Bei anschließender Beanspruchung des Sensors durch äußere Zugkräfte, können diese über die Klemmkörper am Gehäuse aufgenommen werden. Alternativ oder zusätzlich hierzu können die zweiten Zugentlastungsmittel auch durch eine Klebeverbindung zwischen dem Sensor-/Elektrodenabschnitt und dem Gehäuse gebildet sein.

Vorteilhafterweise sind die Klemmkörper und/oder Sensorklemmkörper an den Gehäuseteilen in einem 2-Komponenten-Verfahren hergestellt, wie beispielsweise durch Anspritzten oder Umspritzten einer ersten Materialkomponente an einer zweiten Materialkomponente. Beispielsweise können die Klemmkörper und/oder Sensorklemmkörper durch die erste Materialkomponente, wie beispielsweise ein Elastomer beziehungsweise einen Liquid Silicon Rubber (LSR), gebildet sein, die an dem aus der zweiten Materialkomponente hergestellten Gehäuseteil angespritzt ist, wobei die zweite Materialkomponente beispielsweise aus einem Duroplast und/oder Metall besteht. In jedem Fall können hierbei die Materialeigenschaften der Klemmkörper zur Gewährleistung einer stabilen Klemmung des Leiterelementes oder Sensors unabhängig von den Materialeigenschaften des Gehäuses gewählt werden.

Ferner ist es günstig, wenn die Verbindungsvorrichtung wenigstens bereichsweise vergossen ist, wodurch der hierin aufgenommene elektrische Kontaktbereich zusätzlich stabilisiert und ferner gegen den Eintritt von Fluiden, wie insbesondere Flüssigkeiten abgedichtet werden kann. Auf diese Weise kann der zwischen dem Sensor und dem elektrischen Leiterelement hergestellte Kontakt zusätzlich gesichert werden. Insbesondere wird auf diese Weise eine waschmaschinenfeste Verwendung der Verbindungsanordnung an einem textilen Material, wie insbesondere einem Funktionskleidungsstück ermöglicht.

Vorteilhafterweise ist die Verbindungsvorrichtung dabei wenigstens zwischen den ersten Zugentlastungsmitteln und den zweiten Zugentlastungsmitteln vergossen. Hierdurch kann verhindert werden, dass es innerhalb des vergossenen Bereichs in Folge einer Zugbelastung am Leiterelement oder am Sensor zu einer Einschnürung kommt, die einen Leckagepfad zwischen dem Gießmaterial und dem Leiterelement beziehungsweise Sensor freigibt und somit zur Undichtigkeit führt.

Zudem ist es günstig, wenn die Verbindungsvorrichtung in einer insbesondere abdichtenden Ummantelung aufgenommen ist, wie beispielsweise einer Silikonummantelung. Hierzu kann die Ummantelung im fertig hergestellten Zustand über die Verbindungsvorrichtung gezogen sein. Alternativ hierzu kann die Verbindungsvorrichtung jedoch auch mit der Ummantelung umspritzt sein. In jedem Fall kann durch die Ummantelung eine verbesserte Abdichtung des Kontaktbereichs sowie eine höhere Stoßfestigkeit erzielt werden.

Vorteilhafterweise ist an dem elektrischen Leiterelement zudem eine angespritzte oder montierte Abdichtung zur Abdichtung gegenüber der Verbindungsvorrichtung vorgesehen. Auf diese Weise können an dem Leiterelement selbst Dichtelemente ausgebildet sein, die beim Montieren der Verbindungsanordnung eine Abdichtung gegenüber dem Gehäuse bewirken.

In den Figuren ist eine beispielhafte Ausführungsform der Erfindung dargestellt. Es zeigen:
- Figur 1: eine perspektivische Ansicht einer erfindungsgemäßen Verbindungsanordnung an einem textilen Material,
- Figur 2: eine explodierte Ansicht der Verbindungsanordnung nach Figur 1,
- Figur 3: eine explodierte Ansicht der Verbindungsanordnung nach Figur 1 bei hergestelltem Kontakt,
- Figur 4: eine perspektivische Ansicht einer alternativen Ausführungsform der Verbindungsanordnung mit einem getrennten Schrumpfschlauch,
- Figur 5: eine perspektivische Ansicht der Ausführungsform der Verbindungsanordnung nach Figur 4 mit aufgeschrumpften Schrumpfschlauch,
- Figur 6: eine perspektivische Ansicht der Ausführungsform der Verbindungsanordnung nach Figur 5 mit einer zusätzlichen Schirmungsanordnung,
- Figur 7: eine perspektivische Ansicht der Ausführungsform der Verbindungsanordnung nach Figur 6 mit einer zusätzlichen Umhüllung und
- Figur 8: eine perspektivische Explosionsansicht einer weiteren alternativen Ausführungsform der Verbindungsanordnung mit einer Leiterplatte.

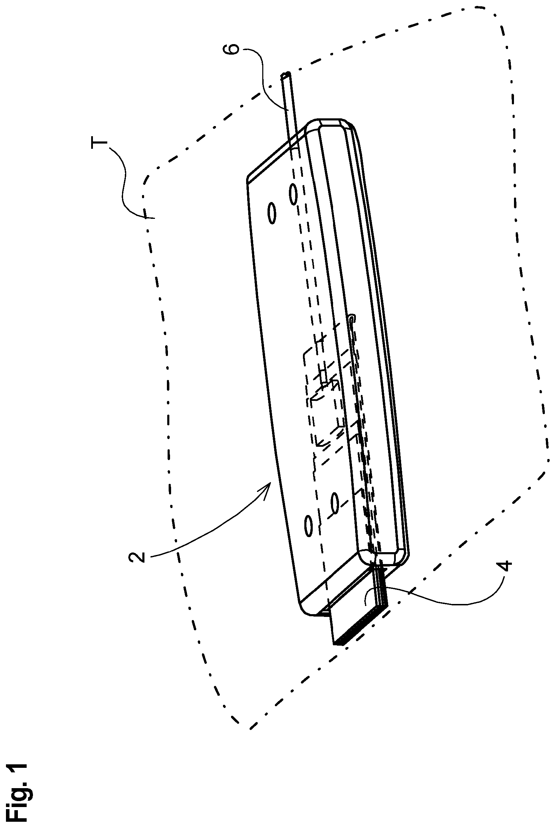

Fig. 1 zeigt eine Verbindungsanordnung 2 für die elektrische und mechanische Verbindung zwischen einem Sensor 4 in Form eines dielektrischen Elastomersensors und wenigstens einem elektrischen Leiterelement 6 in beispielhafter Form eines Kabels. Der Sensor 4 dient dabei beispielsweise als Dehnungs-, Druck- und/oder Beschleunigungssensor. Das elektrische Leiterelement 6 kann alternativ zur dargestellten kabelform auch durch einen Bus oder eine Leiterbahn beziehungsweise einen oder mehrere Leiterdrähte oder ein leitendes und vernähbares Garn gebildet sein.

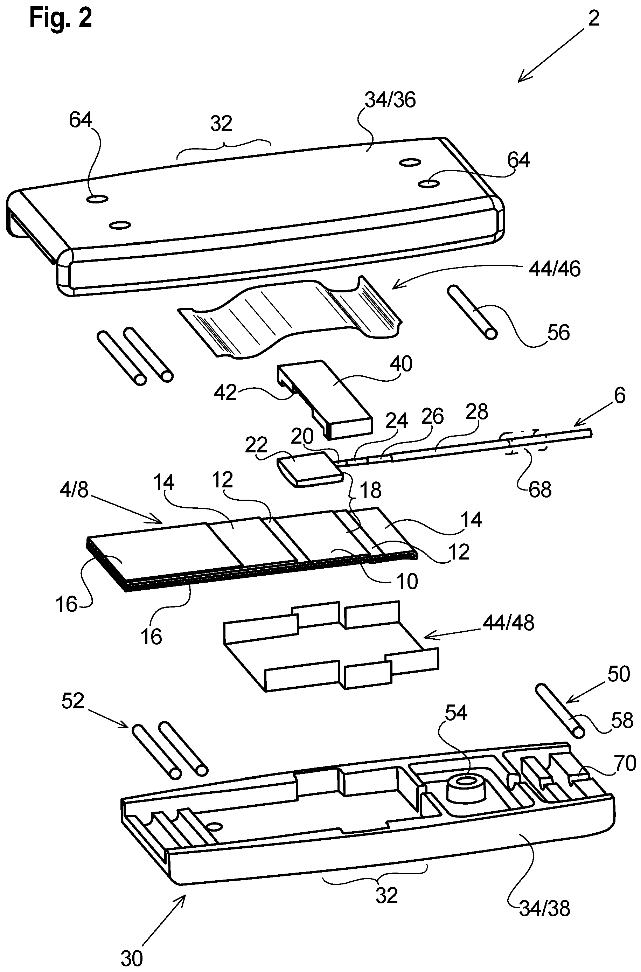

Der Sensor 4 ist, wie in Figur 2 dargestellt, über seine gesamte Länge oder zumindest teilweise durch einen flexiblen beziehungsweise elastischen Sensor-/Elektrodenabschnitt 8 gebildet, der einen flexibel beziehungsweise elastisch verformbaren, flächigen Schichtverbund aufweist. Dieser Schichtverbund weist mindestens eine als Kontaktelektrode 10 wirkende Leiterschicht auf, die zwischen zwei inneren Isolierschichten 12 angeordnet ist.

Alternativ zur Ausbildung des dargestellten Sensors 4 kann die Kontaktelektrode 10 auch Bestandteil einer Temperiereinrichtung, wie beispielsweise eines Heizelementes sein, das beispielsweise zum Erwärmen eines Kleidungsstückes, wie beispielsweise einem Handschuh oder einer Socke verwendet werden kann (nicht dargestellt). In diesem Fall dient das Leiterelement 6 zur Versorgung der Kontaktelektrode 10 mit dem benötigten Heizstrom.

In der dargestellten Ausführungsform der Verbindungsanordnung 2 mit dem Sensor 4 trennen die Isolierschichten 12 die Kontaktelektrode 10 von jeweils einer als Schirmungselektrode 14 fungierenden Schirmungsschicht, wobei beide Schirmungselektroden 14 wiederum zwischen der jeweiligen inneren Isolierschicht 12 und einer äußeren Isolierschicht 16 angeordnet sind.

Das elektrische Leiterelement 6 weist einen elektrischen Innenleiter 20 auf, der an einem freien Ende beispielhaft mit einer Kontaktflächenvergrößerung 22 versehen ist. Diese kann, wie dargestellt, durch einen leitfähigen Klebstoff, ein aufgebrachtes Lot, eine Metalldirektanspritzung, eine Schneid-Klemmverbindung oder durch einen Crimpkontakt gebildet sein und dient zur besseren elektrischen Kontaktierung der Kontaktelektrode 10 in einem gemeinsamen elektrischen Kontaktbereich 18.

Um den elektrischen Innenleiter 20 herum weist das elektrische Leiterelement 6 eine Leiterisolierung 24 auf, die den elektrischen Innenleiter 20 von einer elektrischen Leiterschirmung 26 trennt. Um diese Leiterschirmung 26 herum ist wiederum ein isolierender Leitermantel 28 vorgesehen.

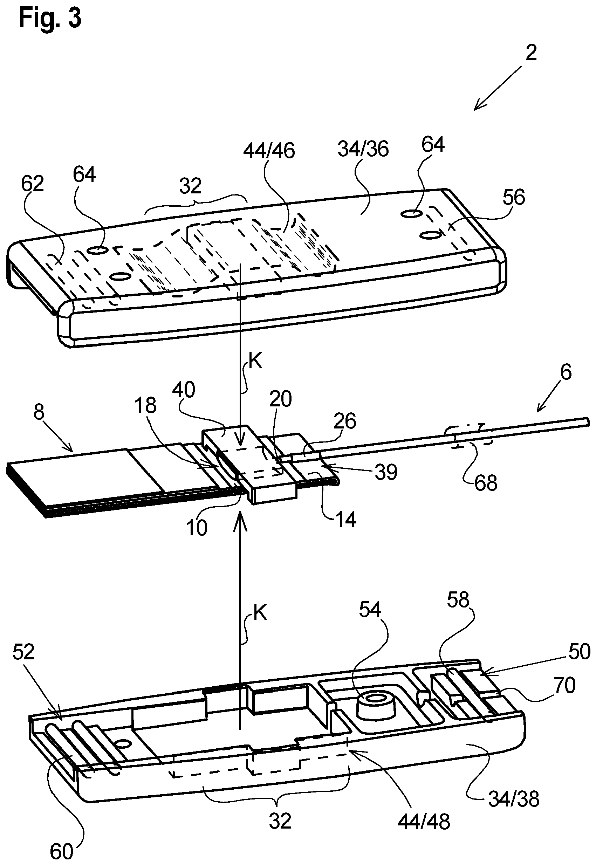

Ferner weist die Verbindungsanordnung 2 eine Verbindungsvorrichtung 30 auf, die eine Klemmeinrichtung 32 bildet, mittels der der elastische Sensor-/Elektrodenabschnitt 8 wenigstens auf Höhe des elektrischen Kontaktbereichs 18, insbesondere geschlossen umlaufend umgriffen werden kann. Hierzu weist die Verbindungsvorrichtung 30 ein zweiteiliges Gehäuse 34 mit einem ersten Gehäuseteil 36 und einem zweiten Gehäuseteil 38 auf, die unter Zwischenlage des Sensor-/Elektrodenabschnittes 8 und des elektrischen Innenleiters 20 zusammengesetzt werden können, wobei sie Klemmkräfte K im Kontaktbereich 18 erzeugen, wie aus Figur 3 zu entnehmen ist.

Die einzelnen Schichten sowohl des elastischen Sensor-/Elektrodenabschnittes 8 als auch des elektrischen Leiterelementes 6 sind dabei , wie dargestellt, abgestuft freigelegt, so dass bei der Montage der Verbindungsanordnung 2, gemäß Figur 3, die Kontaktflächenvergrößerung 22 des elektrischen Innenleiters 20 zur Ausbildung des elektrischen Kontaktbereichs 18 an die Kontaktelektrode 10 angelegt werden kann, während gleichzeitig, die Leiterschirmung 26 die Schirmungselektrode 14 unter Ausbildung eines ersten Schirmungskontaktbereichs 39 kontaktiert.

Zudem weist die Verbindungsvorrichtung 30 einen Niederhalter 40 auf, der beim Zusammensetzen des Gehäuses 34 auf Höhe des Kontaktbereichs 18 gegen den elektrischen Innenleiter 20 beziehungsweise dessen Kontaktflächenvergrößerung 22 drückt und diesen, gemäß Figur 3, gegen die Kontaktelektrode 10 vorspannt. Hierzu ist der Niederhalter 40 entweder einteilig mit einem der beiden Gehäuseteile 36, 38 ausgebildet oder in dieses einsetzbar. Zudem kann der Niederhalter 40 zur leichteren Montage mit dem elektrischen Innenleiter 20 verbunden sein. Wie in Figur 2 dargestellt, kann der Niederhalter 40 hierzu beispielsweise eine Aufnahme 42 zum Einstecken oder Verrasten der Kontaktflächenvergrößerung 22 aufweisen. Alternativ oder zusätzliche hierzu kann der elektrische Innenleiter 20 am Niederhalter 40 beispielsweise auch angeklebt oder angespritzt sein.

Darüber hinaus weist die Verbindungsvorrichtung 30 eine Schirmungsanordnung 44 auf, die ein am ersten Gehäuseteil 36 gehaltenes erstes Schirmungselement 46 und ein am zweiten Gehäuseteil 38 gehaltenes zweites Schirmungselement 48 umfasst. Die Schirmungselemente 46, 48 sind dabei derart geformt, dass sie den Kontaktbereich 18 nach außen hin abschirmen und einzeln oder gemeinsam die beiden Schirmungselektroden 14 des elastischen Sensor-/Elektrodenabschnittes 8 und die Leiterschirmung 26 elektrisch verbinden. Die beiden Schirmungselemente 46, 48 können hierbei in das betreffende Gehäuseteil 36, 38 integriert sein, wie beispielsweise durch Ausbildung eines Molded Interconnect Device oder Mechatronic Integrated Device. Alternativ hierzu können die beiden Schirmungselemente 46, 48 in das betreffende Gehäuseteil 36, 38 eingespritzt, herausnehmbar eingesetzt oder eingeklebt sein.

Zur Aufnahme von Zugkräften, die durch äußere Beaufschlagungen an dem elektrischen Leiterelement 6 und/oder am elastischen Sensor-/Elektrodenabschnitt 8 auftreten können, sind erste Zugentlastungsmittel 50 zur zusätzlichen mechanischen Festlegung des elektrischen Leiterelementes 6 und zweite Zugentlastungsmittel 52 zur zusätzlichen mechanischen Festlegung des elastischen Sensor-/Elektrodenabschnittes 8 am Gehäuse 34 vorgesehen.

Die ersten Zugentlastungsmittel 50 können dabei Umlenkmittel oder sonstige Schikanen zum Übertragen von Zugkräften auf das Gehäuse 34 aufweisen, wie beispielsweise einen vom elektrischen Leiterelement 6 umwickelbaren Dom 54. Ferner umfassen die ersten Zugentlastungsmittel 50 beispielsweise wenigstens einen ersten Klemmkörper 56, der am ersten Gehäuseteil 36 gehalten ist, sowie wenigstens einen zweiten Klemmkörper 58, der am zweiten Gehäuseteil 38 gehalten ist. Diese Klemmkörper 56, 58 werden bei der Montage des Gehäuses 34 unter Zwischenlage des elektrischen Leiterelementes 6 aneinander angelegt. Alternativ oder zusätzlich hierzu können die ersten Zugentlastungsmittel 50 auch durch eine Klebeverbindung zwischen dem elektrischen Leiterelement 6 und dem Gehäuse 34 gebildet sein (nicht dargestellt).

Die zweiten Zugentlastungsmittel 52 können ebenfalls wenigstens einen ersten Sensorklemmkörper 60, der am ersten Gehäuseteil 36 gehalten ist, und wenigstens einen zweiten Sensorklemmkörper 62, der am zweiten Gehäuseteil 38 gehalten ist, aufweisen, die bei der Montage des Gehäuses 34 unter Zwischenlage des elastischen Sensor-/Elektrodenabschnittes aneinander angelegt werden. Alternativ oder zusätzlich hierzu können die zweiten Zugentlastungsmittel 52 auch durch eine Klebeverbindung zwischen dem Sensor-/Elektrodenabschnitt 8 und dem Gehäuse 34 gebildet sein (nicht dargestellt).

Sowohl die Klemmkörper 56, 58 als auch die Sensorklemmkörper 60, 62 können dabei aus einem gegenüber dem Gehäuse 34 unterschiedlichen Material gebildet sein, wie beispielsweise einem Elastomer, wie insbesondere LSR. Hierzu kann das Gehäuse 34 mit den Klemmkörper 56, 58 und Sensorklemmkörpern 60, 62 beispielsweise in einem 2-Komponenten-Verfahren hergestellt sein. Beispielsweise kann dabei eine erste Materialkomponente zur Herstellung der Klemmkörper 56, 58 und/oder Sensorklemmkörper 60, 62 an das Gehäuseteile 36, 38 angespritzt werden, das aus der zweiten Materialkomponente hergestellt ist, oder umgekehrt. Alternativ hierzu können die Klemmkörper 56, 58 und/oder Sensorklemmkörper 60, 62 wenigstens teilweise auch, wie dargestellt, durch separat hergestellte und in die Gehäuseteilen 36, 38 einsetzbare Teile gebildet sein.

Zur sicheren Abdichtung der Verbindungsanordnung 2 und insbesondere des elektrischen Kontaktbereichs 18 nach außen, kann die Verbindungsvorrichtung 30 zumindest zwischen den ersten Zugentlastungsmitteln 50 und den zweiten Zugentlastungsmitteln 52 zudem vergossen werden. Hierzu weist das Gehäuse 34 Vergussöffnungen 64 auf, über die ein entsprechendes aushärtendes beziehungsweise sich vernetzendes Gießmaterial eingebracht werden kann, wie beispielsweise Silikon.

Alternativ oder zusätzlich zu dieser Abdichtung kann die Verbindungsvorrichtung 30 auch in einer Ummantelung beziehungsweise einer Umspritzung des Gehäuses 34 aufgenommen sein (nicht dargestellt). Darüber hinaus kann auch an dem wenigstens einen elektrischen Leiterelement 6 eine zusätzliche Abdichtung 68 angespritzt oder montiert sein, die bei der Montage des Gehäuses 34 eine entsprechende Eintrittsöffnung 70 der Verbindungsvorrichtung 30 abdichtet.

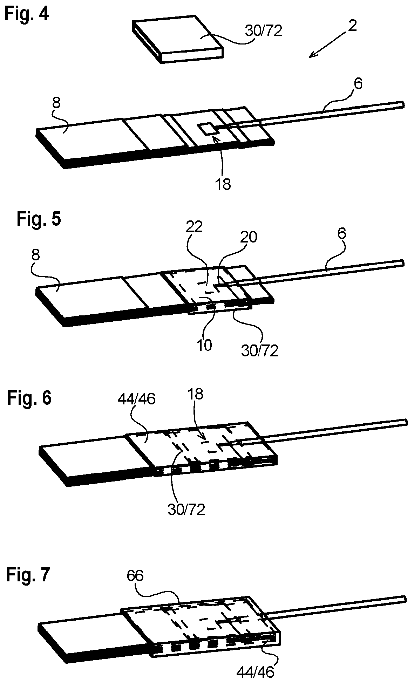

Figur 4 zeigt eine alternative Ausführungsform der Verbindungsanordnung 2 bei der die Verbindungsvorrichtung 30 durch einen Schrumpfschlauch 72 gebildet ist. Dieser wird im elektrischen Kontaktbereich 18 unter Zwischenlage des elektrischen Leiters 6 am elastischen Sensor-/Elektrodenabschnitt 8 aufgeschrumpft, wie aus Figur 5 zu entnehmen ist. Hierdurch wird der elektrische Innenleiter 20 beziehungsweise dessen Kontaktflächenvergrößerung 22 zumindest während der Montage an der Kontaktelektrode 10 gehalten und beispielsweise durch Umspritzen mit einem Kunststoff gegen diese vorgespannt. Um hierbei die elektrische Kontaktierung zu verbessern und/oder den Kontaktbereich gezielt abzuschirmen, kann der Schrumpfschlauch 72 zumindest bereichsweise auch selbst elektrisch leitfähig sein.

Zur elektrischen Abschirmung des Kontaktbereichs 18 kann bei dieser Ausführungsform die Schirmungsanordnung 44 gemäß Figur 6 außerhalb des Schrumpfschlauches 72 vorgesehen werden. Die Schirmungsanordnung 44 kann hierbei als Schirmungselement 46 beispielsweise ein leitfähiges Kunststoffteil, ein in ein Kunststoffteil eingespritztes Metallteil oder einen leitfähigen Lack eines Gehäuseteils aufweisen. In jedem Fall sorgt der Schrumpfschlauch 72 hierbei für eine zuverlässige elektrische Trennung des Kontaktbereichs 18 von der Schirmungsanordnung 44.

Um eine zusätzliche Abdichtung des vom Schrumpfschlauch 72 fixierten Kontaktbereichs 18 zu erreichen, kann an diesem eine zusätzliche Umhüllung 66 vorgesehen sein, wie in Figur 7 dargestellt. Die Umhüllung 66 kann dabei beispielsweise durch Umspritzen mit einem abdichtenden Material, wie beispielsweise Silikon, hergestellt sein.

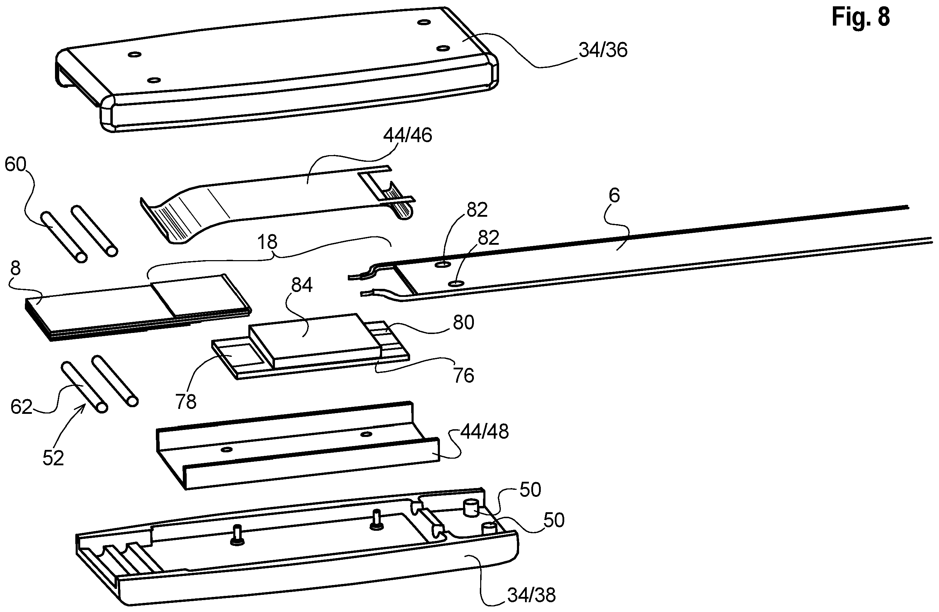

Figur 8 zeigt eine weitere Ausführungsform der Verbindungsanordnung 2, bei der der elektrische Kontaktbereich 18 mit Hilfe einer Leiterplatte 76 beziehungsweise einem Printed Circuit Board (PCB) hergestellt ist, an der ein Sensorkontaktbereich 78 zur Kontaktierung des elastischen Sensor-/Elektrodenabschnittes 8 sowie ein Leiterkontaktbereich 80 zur Kontaktierung des elektrischen Leiterelementes 6 vorgesehen ist. Das Leiterelement 6 ist hierbei beispielhaft als zweiadriges textiles Flachbandkabel dargestellt, das über zwei Fixieröffnungen 82, an zwei als erste Zugentlastungsmittel 50 dienende Dome des Gehäuses 34 befestigbar ist. Die Leiterplatte 76 dient dabei zur Aufnahme einer Elektronik 84, die beispielsweise einen weiteren Sensor, wie beispielsweise einen Beschleunigungssensor, oder einen Schalter umfassen kann.

Unabhängig von der Ausführungsform kann die Verbindungsanordnung 2, wie in Figur 1 dargestellt, beispielsweise zur Verwendung an einem textilen Material T wie beispielsweise einem Bekleidungsstück, einem Wäscheteil, einem Dekorationsstoff oder einem Vorhang verwendet werden und dabei verschiedene Funktionen erfüllen. Beispielsweise kann die jeweilige Sensorik zur Überwachung von Körperfunktionen eines Benutzers oder zur Ermittlung bestimmter Materialbelastungen dienen. Dabei kann die Verbindungsanordnung 2 in der Art eines Schalters zur Übermittlung eines Signals in Abhängigkeit einer Detektion einer bestimmten Beaufschlagung beziehungsweise Beanspruchung verwendet werden, die an dem textilen Trägermaterial auftritt.

## Patentansprüche

1. Verbindungsanordnung (2) für die elektrische und mechanische Verbindung zwischen einer Kontaktelektrode (10) und einem elektrischen Leiterelement (6)
mit einem flexiblen Sensor-/Elektrodenabschnitt (8), in dem die Kontaktelektrode (10) wenigstens teilweise angeordnet ist,
wenigstens einem elektrischen Innenleiter (20) des elektrischen Leiterelementes (6) zum Anlegen und/oder Abnehmen einer elektrischen Spannung und/oder kapazitiven Änderung an der Kontaktelektrode (10)
und einem elektrischen Kontaktbereich (18), in dem der wenigstens eine elektrische Innenleiter (20) die Kontaktelektrode (10) elektrisch kontaktiert,
**dadurch gekennzeichnet, dass** die Verbindungsanordnung (2) eine Verbindungsvorrichtung (30) zur Herstellung einer elektrischen Verbindung zwischen dem elastischen Sensor-/Elektrodenabschnitt (8) und dem elektrischen Innenleiter (20) aufweist, die im Kontaktbereich (18) unter Zwischenlage des Innenleiters (20) gegen die Kontaktelektrode (10) vorgespannt ist.

2. Verbindungsanordnung nach Anspruch 1, **dadurch gekennzeichnet, dass** die Verbindungsvorrichtung (30) eine den Sensor-/Elektrodenabschnitt (8) auf Höhe des elektrischen Kontaktbereichs (18) umschließende Klemmeinrichtung (32) aufweist.

3. Verbindungsanordnung nach Anspruch 1 oder 2, **dadurch gekennzeichnet, dass** der elektrische Innenleiter (20) im Kontaktbereich (18) eine Kontaktflächenvergrößerung (22) aufweist.

4. Verbindungsanordnung nach einem der Ansprüche 1 bis 3, **dadurch gekennzeichnet, dass** der flexible Sensor-/Elektrodenabschnitt (8) durch einen, zumindest abschnittsweise flächenförmigen, elastischen Sensor (4) mit wenigstens einem dielektrischen Elastomer gebildet ist, das zwischen der Kontaktelektrode (10) und wenigstens einer weiteren Elektrode (14) angeordnet ist.

5. Verbindungsanordnung nach Anspruch 4, **dadurch gekennzeichnet, dass** der Sensor (4) abschnittsweise elastisch ist und eine mit der Kontaktelektrode (10) verbundene Leiterplatte (76) aufweist.

6. Verbindungsanordnung nach einem der Ansprüche 1 bis 5, **dadurch gekennzeichnet, dass** die Verbindungsvorrichtung (30) ein wenigstens zweiteiliges Gehäuse (34) mit einem ersten Gehäuseteil (36) und einem zweiten Gehäuseteil (38) aufweist, die unter Zwischenlage des Sensor-/Elektrodenabschnittes (8) und des elektrischen Innenleiters (20) sowie unter Erzeugung von Klemmkräften (K) im Kontaktbereich (18) zusammensetzbar sind.

7. Verbindungsanordnung nach einem der Ansprüche 2 bis 6, **dadurch gekennzeichnet, dass** die Verbindungsvorrichtung (30) einen Schrumpfschlauch (72) aufweist, der auf Höhe des Kontaktbereichs (18) unter Zwischenlage des elektrischen Innenleiters (20) um den Sensor-/Elektrodenabschnitt (8) herum aufschrumpfbar ist.

8. Verbindungsanordnung nach einem der Ansprüche 2 bis 7, **dadurch gekennzeichnet, dass** die Verbindungsvorrichtung (30) auf Höhe des Kontaktbereichs (18) einen Niederhalter (40) aufweist, über den der elektrische Innenleiter (20) gegen die Kontaktelektrode (10) vorspannbar ist, wobei insbesondere der elektrische Innenleiter (20) mit dem Niederhalter (40) verbunden ist.

9. Verbindungsanordnung nach einem der Ansprüche 1 bis 8, **dadurch gekennzeichnet, dass** der elektrische Innenleiter (20) eine elektrische Leiterschirmung (26) aufweist, die beabstandet zum Kontaktbereich (18) eine elektrische Sensorschirmung des Sensor-/Elektrodenabschnittes (8) unter Ausbildung eines Schirmungskontaktbereichs (39) kontaktiert.

10. Verbindungsanordnung nach Anspruch 9, **dadurch gekennzeichnet, dass** die Sensorschirmung zwei Schirmungselektroden (14) aufweist, die an zwei voneinander abgewandten Seiten der Kontaktelektrode (10) angeordnet sind, wobei an der Verbindungsvorrichtung (30) eine Schirmungsanordnung (44) vorgesehen ist, die den Kontaktbereich (18) nach außen hin abschirmt und dabei beide Schirmungselektroden (14) der Sensorschirmung elektrisch verbindet.

11. Verbindungsanordnung nach Anspruch 10, **dadurch gekennzeichnet, dass** die Schirmungsanordnung (44) am Gehäuse (34) gehalten ist und ein Schirmungselement (46, 48) aufweist, das aus einem leitfähigen Kunststoff, aus einem eingespritzten Metall oder einem leitfähigen Lack hergestellt ist.

12. Verbindungsanordnung nach Anspruch 11, **dadurch gekennzeichnet, dass** die Schirmungsanordnung (44) außerhalb des Schrumpfschlauches (72) vorgesehen ist.

13. Verbindungsanordnung nach einem der Ansprüche 1 bis 12, **dadurch gekennzeichnet, dass** die Verbindungsvorrichtung (30) erste Zugentlastungsmittel (50) für das elektrische Leiterelement (20) aufweist.

14. Verbindungsanordnung nach Anspruch 13, **dadurch gekennzeichnet, dass** die ersten Zugentlastungsmittel (50) Umlenkmittel, wie insbesondere einen umwickelbaren Dom (54), und/oder einen ersten Klemmkörper (56) am ersten Gehäuseteil (36) und einen zweiten Klemmkörper (58) am zweiten Gehäuseteil (38) aufweisen, die unter Ausbildung von Klemmkräften (K) am elektrischen Leiterelement (20) aneinander anlegbar sind.

15. Verbindungsanordnung nach einem der Ansprüche 1 bis 14, **dadurch gekennzeichnet, dass** die Verbindungsvorrichtung (30) zweite Zugentlastungsmittel (52) für den Sensor-/Elektrodenabschnitt (8) aufweist, die insbesondere einen ersten Sensorklemmkörper (60) am ersten Gehäuseteil (36) und einen zweiten Sensorklemmkörper (62) am zweiten Gehäuseteil (38) aufweisen, die unter Ausbildung von Klemmkräften (K) am Sensor (4) aneinander anlegbar sind.

16. Verbindungsanordnung nach Anspruch 14 oder 15, **dadurch gekennzeichnet, dass** die Klemmkörper (56, 58) und/oder Sensorklemmkörper (60, 62) an den Gehäuseteilen (36, 38) in einem 2-Komponenten-Verfahren hergestellt sind, bei dem eine erste Materialkomponente an einer zweiten Materialkomponente angespritzt oder umspritzt ist.

17. Verbindungsanordnung nach einem der Ansprüche 1 bis 16, **dadurch gekennzeichnet, dass** die Verbindungsvorrichtung (30) wenigstens bereichsweise vergossen ist, insbesondere zwischen den ersten Zugentlastungsmitteln (50) und den zweiten Zugentlastungsmitteln (52).

18. Verbindungsanordnung nach einem der Ansprüche 1 bis 17, **dadurch gekennzeichnet, dass** die Verbindungsvorrichtung (30) in einer Ummantelung (66) aufgenommen ist.

19. Verbindungsanordnung nach einem der Ansprüche 1 bis 18, **dadurch gekennzeichnet, dass** an dem elektrischen Leiterelement (20) eine angespritzte oder montierte Abdichtung (68) zur Abdichtung gegenüber der Verbindungsvorrichtung (30) vorgesehen ist.

## Claims

1. Connection assembly (2) for the electrical and mechanical connection between a contact electrode (10) and an electrical conductor element (6)
having a flexible sensor/electrode section (8), in which the contact electrode (10) is at least partially arranged,
at least one electrical inner conductor (20) of the electrical conductor element (6) for applying and/or collecting an electrical voltage and/or capacitive change at the contact electrode (10),
and an electrical contact region (18) in which the at least one electrical inner conductor (20) makes electrical contact with the contact electrode (10),
**characterized in that** the connection assembly (2) has a connecting device (30) for establishing an electrical connection between the elastic sensor/electrode portion (8) and the electrical inner conductor (20), which is located in the contact region (18) under intermediate layer of the inner conductor (20) clamped against the contact electrode (10).

2. Connection assembly according to claim 1, **characterized in that** the connecting device (30) has a clamping unit (32) enclosing the sensor/electrode section (8) at the level of the electrical contact region (18).

3. Connection assembly according to claim 1 or 2, **characterized in that** the electrical inner conductor (20) has a contact surface enlargement (22) in the contact region (18).

4. Connection assembly according to any one of claims 1 to 3, **characterized in that** the flexible sensor/electrode section (8) is formed by an at least partially flat, elastic sensor (4) with at least one dielectric elastomer, which is arranged between the contact electrode (10) and at least one further electrode (14).

5. Connection assembly according to claim 4, **characterized in that** the sensor (4) is elastic in sections and has a printed circuit board (76) connected to the contact electrode (10).

6. Connection assembly according to any one of claims 1 to 5, **characterized in that** the connecting device (30) has an at least two-part housing (34) with a first housing part (36) and a second housing part (38), which can be assembled, with interposition of the sensor/electrode section (8) and the electrical inner conductor (20), as well as generation of clamping forces (K) in the contact region (18).

7. Connection assembly according to any one of claims 2 to 6, **characterized in that** the connecting device (30) has a heat-shrink tube (72) which can be heat-shrunk about the sensor/electrode section (8) at the level of the electrical contact region (18), with interposition of the electrical inner conductor (20).

8. Connection assembly according to any one of claims 2 to 7, **characterized in that** the connecting device (30) has a hold-down device (40) at the level of the contact region (18), via which the electrical inner conductor (20) can be biased against the contact electrode (10), wherein in particular the electrical inner conductor (20) is connected to the hold-down device (40).

9. Connection assembly according to any one of claims 1 to 8, **characterized in that** the electrical inner conductor (20) has electrical conductor shielding (26), which is spaced apart from the contact region (18) and which makes contact with electrical sensor shielding of the sensor/electrode section (8) to form a shielding contact region (39) spaced apart from the contact region (18).

10. Connection assembly according to claim 9, **characterized in that** the sensor shielding has two shielding electrodes (14) which are arranged on two opposite sides of the contact electrode (10), wherein a shielding assembly (44) is provided at the connecting device (30) which shields the contact region (18) from the outside and electrically connects both shielding electrodes (14) of the sensor shielding.

11. Connection assembly according to claim 10, **characterized in that** the shielding assembly (44) is retained at the housing (34) and has a shielding element (46, 48) which is made of a conductive plastic, an injected metal, or a conductive lacquer.

12. Connection assembly according to claim 11, **characterized in that** the shielding assembly (44) is provided outside the heat-shrink tube (72).

13. Connection assembly according to any one of claims 1 to 12, **characterized in that** the connecting device (30) has first strain relief means (50) for the electrical conductor element (20).

14. Connection assembly according to claim 13, **characterized in that** the first strain relief means (50) have deflection means, such as in particular a wrap-around dome (54), and/or have a first clamping body (56) at the first housing part (36) and a second clamping body (58) at the second housing part (38), which can be placed against one another, with the formation of clamping forces (K) on the electrical conductor element (20).

15. Connection assembly according to any one of claims 1 to 14, **characterized in that** the connecting device (30) has second strain relief means (52) for the sensor/electrode section (8), which in particular have a first sensor clamping body (60) at the first housing part (36) and a second sensor clamping body (62) at the second housing part (38), which can be placed against one another, with the formation of clamping forces (K) on the sensor (4).

16. Connection assembly according to claim 14 or 15, **characterized in that** the clamping bodies (56, 58) and/or sensor clamping bodies (60, 62) at the housing parts (36, 38) are produced in a 2-component process in which a first material component is injected or overmolded on a second material component.

17. Connection assembly according to any one of claims 1 to 16, **characterized in that** the connecting device (30) is cast at least in sections, in particular between the first strain relief means (50) and the second strain relief means (52).

18. Connection assembly according to any one of claims 1 to 17, **characterized in that** the connecting device (30) is accommodated in a jacket (66).

19. Connection assembly according to any one of claims 1 to 18, **characterized in that** an injection-molded or mounted seal (68) for sealing against the connecting device (30) is provided at the electrical conductor element (20).

## Revendications

1. Ensemble de connexion (2) pour la connexion électrique et mécanique entre une électrode de contact (10) et un élément conducteur électrique (6)
avec une section flexible, capteur/électrode (8) dans laquelle l'électrode de contact (10) est au moins partiellement disposée,
au moins un conducteur interne électrique (20) de l'élément conducteur électrique (6) pour appliquer et/ou supprimer une tension électrique et/ou un changement capacitif à l'électrode de contact (10)
et une région de contact électrique (18), dans laquelle au moins un conducteur interne électrique (20) entre en contact électrique avec l'électrode de contact (10),
**caractérisé par le fait que** l'ensemble de connexion (2) possède un dispositif de connexion (30) pour établir une connexion électrique entre la partie capteur/électrode élastique (8) et le conducteur interne électrique (20), qui est préchargé contre l'électrode de contact (10) dans la région de contact (18) sous la couche intermédiaire du conducteur interne (20).

2. Ensemble de connexion selon la revendication 1, **caractérisé par** le dispositif de connexion (30) possède un dispositif de serrage (32) entourant la partie capteur/électrode (8) au niveau de la région de contact électrique (18).

3. Ensemble de connexion selon la revendication 1 ou 2, **caractérisée par le fait que** le conducteur interne électrique (20) a une augmentation de la surface de contact (22) dans la région de contact (18).

4. Ensemble de connexion selon l'une des revendications 1 à 3, **caractérisée par le fait que** la partie capteur/électrode flexible (8) est formée par un capteur élastique (4) disposant d'au moins un élastomère diélectrique entre l'électrode de contact (10) et au moins une électrode supplémentaire (14).

5. Ensemble de connexion selon la revendication 4, **caractérisé par le fait que** le capteur (4) est élastique par sections et possède une carte de circuit imprimé (76) reliée à l'électrode de contact (10).

6. Ensemble de connexion selon l'une des revendications 1 à 5, **caractérisée par le fait que** le dispositif de connexion (30) comprend un boîtier (34) à deux parties au moins, avec une première partie de boîtier (36) et une seconde partie de boîtier (38), qui peuvent être assemblées sous la position intermédiaire de la partie capteur/électrode (8) et du conducteur interne électrique (20) et sous la génération de forces de serrage (K) dans la région de contact (18).

7. Ensemble de connexion selon l'une des revendications 2 à 6, **caractérisée par le fait que** le dispositif de connexion (30) possède un tube thermorétractable (72) qui est rétractable au niveau de la région de contact (18) avec une couche intermédiaire du conducteur interne électrique (20) autour de la partie capteur/électrode (8).

8. Ensemble de connexion selon l'une des revendications 2 à 7, **caractérisée par le fait que** le dispositif de connexion (30) au niveau de la région de contact (18) possède un dispositif de maintien (40) par lequel le conducteur interne électrique (20) peut être préchargé contre l'électrode de contact (10), où en particulier le conducteur interne électrique (20) est connecté au dispositif de maintien (40).

9. Ensemble de connexion selon l'une des revendications 1 à 8, **caractérisée par le fait que** le conducteur interne électrique (20) possède un blindage conducteur électrique (26) qui, à une distance de la région de contact (18), entre en contact avec un blindage de capteur électrique de la portion capteur/électrode (8) formant une zone de contact de blindage (39).

10. Ensemble de connexion selon la revendication 9, **caractérisé par le fait que** le blindage du capteur comporte deux électrodes de blindage (14) disposées sur deux côtés de l'électrode de contact (10) face à l'opposé, où un dispositif de blindage (44) est fourni au dispositif de connexion (30) qui protège la région de contact (18) de l'extérieur et connecte ainsi électriquement les deux électrodes de blindage (14) du blindage du capteur.

11. Ensemble de connexion selon l'affirmation 10, **caractérisée par le fait que** le dispositif de blindage (44) est maintenu au boîtier (34) et possède un élément de blindage (46, 48) fabriqué en plastique conducteur, métal injecté ou vernis conducteur.

12. Ensemble de connexion selon la revendication 11, **caractérisée par le fait que** le dispositif de blindage (44) est fournie à l'extérieur du tube thermorétractable (72).

13. Ensemble de connexion selon l'une des revendications 1 à 12, **caractérisée par** le dispositif de connexion (30) ayant des moyennes de déformation (50) pour le conducteur interne électrique (20).

14. Ensemble de connexion selon l'affirmation 13, **caractérisée par le fait que** les premiers moyens de déformation (50) ont des moyens de déviation, tels qu'en particulier un dôme enroulable (54) et/ou un premier corps de serrage (56) sur la première partie de boîtier (36) et un second corps de serrage (58) sur la seconde partie de boîtier (38), qui peuvent être appliqués l'un à l'autre en formant des forces de serrage (K) sur le conducteur interne électrique (20).

15. Ensemble de connexion selon l'une des revendications 1 à 14, **caractérisée par le fait que** le dispositif de connexion (30) possède une seconde moyenne de déformation (52) pour la partie capteur/électrode (8), qui possède notamment un premier corps de serrage du capteur (60) sur la première partie de boîtier (36) et un second corps de serrage du capteur (62) sur la seconde partie de boîtier (38), qui peuvent être fixés entre eux par la formation de forces de serrage (K) sur le capteur (4).

16. Ensemble de connexion selon la revendication 14 ou 15, **caractérisée par le fait que** les corps de serrage (56, 58) et/ou les corps de serrage des capteurs (60, 62) sur les parties du boîtier (36, 38) sont fabriqués selon un procédé à deux composantes où un premier matériau est moulé ou surmoulé sur un second composant matériau.

17. Ensemble de connexion selon l'une des revendications 1 à 16, **caractérisée par le fait que** le dispositif de connexion (30) est encapsulé au moins dans une certaine zone, en particulier entre les premières moyennes de déformation (50) et la seconde moyenne de déformation (52).

18. Ensemble de connexion selon l'une des revendications 1 à 17, **caractérisée par le fait que** le dispositif de connexion (30) est logé dans une gaine (66).

19. Ensemble de connexion selon l'une des revendications 1 à 18, **caractérisé par le fait qu'**un joint injecté ou monté (68) est prévu sur le conducteur interne électrique (20) pour le sceller contre le dispositif de connexion (30).
